# FASCICULE DE BREVET EUROPEEN

(11) **EP 2 936 110 B1**
(45) Date de publication et mention de la délivrance du brevet: **27.03.2019**
(21) Numéro de dépôt: 13824616.0
(22) Date de dépôt: 20.12.2013
(51) Int. Cl.: G01M 17/02

(54) **VÉHICULE COMPRENANT DES MOYENS DE DÉTECTION DU BRUIT GÉNÉRÉ PAR UN PNEUMATIQUE**
FAHRZEUG MIT EINEM INSTRUMENT ZUR ERKENNUNG DES DURCH EINEN REIFEN ERZEUGTEN RAUSCHENS
VEHICLE COMPRISING MEANS FOR DETECTING NOISE GENERATED BY A TIRE

(30) Priorité: 21.12.2012 FR 1262575
(43) Date de publication de la demande: 28.10.2015
(73) Titulaire: Compagnie Générale des Etablissements Michelin, 63000 Clermont-Ferrand (FR)
(72) Inventeur: PATURLE, Antoine, F-63040 Clermont-Ferrand Cedex 9 (FR)
(74) Mandataire: Roussy, Delphine
(86) Numéro de dépôt international: PCT/FR2013/053240
(87) Numéro de publication internationale: WO 2014/096745

(56) Documents cités:
- EP-A1- 2 468 572
- DE-A1-102004 036 811
- US-A1- 2004 154 715

## Description

La présente invention concerne le domaine technique de la détection du bruit généré par un ou plusieurs pneumatiques, typiquement pour des véhicules automobiles tels que les véhicules de tourisme, individuels ou collectifs, ou les véhicules utilitaires, tels que par exemple les camions ou les engins de chantier, ou les véhicules à trois roues etc...

On connaît déjà dans l'état de la technique des procédés permettant d'acquérir en temps réel un signal sonore émis par un ou plusieurs pneumatiques lorsque le véhicule roule, notamment pour obtenir des informations sur l'état de la route, par exemple son caractère plus ou moins lisse, ou bien sur l'état d'usure du ou des pneumatiques. Des moyens de test dans l'état de la technique sont notamment divulgués dans les documents US20040154715A1, EP2468572A1, DE102004036811A1 et le US2010033313A1.

Il est également connu, par exemple dans la demande de brevet FR 0958586, d'utiliser au moins un pneumatique comprenant un ou plusieurs témoins d'usure sonore, ceci afin de générer une empreinte acoustique corrélée à l'état d'usure du pneumatique, permettant la détection en temps réel de celle-ci.

On peut notamment acquérir grâce à un microphone le signal sonore généré par le pneumatique, traiter ce signal pour éliminer certains bruits parasites, par exemple celui généré par le moteur, puis réaliser une décomposition du signal traité en composantes fréquentielles séparées, et enfin identifier les fréquences associées à un niveau d'usure du pneumatique. Les composantes fréquentielles d'un tel signal sont remarquables, en liaison avec la répartition des témoins d'usure sonore et la vitesse du véhicule, si bien qu'il est possible de séparer l'empreinte acoustique générée par les témoins d'usure sonore du signal acoustique de roulement, lié à l'état de la route.

A cet effet, compte tenu de la sensibilité limitée de détection des microphones utilisables, et de la présence de bruits parasites (bruit du moteur, bruits aérodynamiques, bruits intérieurs et extérieurs), il est souhaitable que l'intensité des signaux sonores captés en provenance des pneumatiques soit la plus élevée possible.

Il est généralement souhaitable d'acquérir les signaux sonores générés par les différents pneumatiques du véhicule, ou par l'un seulement de ces pneumatiques, lorsque celui-ci atteint un seuil d'usure prédéterminé. Dans ce dernier cas, on ignore généralement la position de ce pneumatique sur le véhicule. En effet, même si l'on change plusieurs pneumatiques simultanément, il n'est pas possible de savoir lequel d'entre eux atteindra le premier ce seuil d'usure.

Il est donc nécessaire de pouvoir acquérir un signal sonore d'intensité suffisante pouvant provenir de l'un parmi plusieurs pneumatiques du véhicule.

Il est par ailleurs souhaitable de minimiser le nombre de microphones nécessaires, afin de limiter la complexité du système d'acquisition et de traitement des signaux, et les coûts afférents.

Il est connu par ailleurs que le son se propage typiquement dans toutes les directions et que l'énergie sonore décroît en raison inverse du carré de la distance. On a donc essayé d'acquérir le signal sonore émis par les deux pneumatiques du train avant au moyen d'un microphone unique disposé juste sous le châssis du véhicule au niveau du train avant du véhicule, en un point transversal médian. Cette position, équidistante des deux pneumatiques du train avant, est en effet celle conduisant à la distance minimale du microphone à ces deux pneumatiques du train avant.

On a cependant constaté que l'intensité du signal sonore mesuré à cette position n'est pas suffisante. Une constatation identique a été faite pour les pneumatiques du train arrière. Ainsi, il semble difficile d'acquérir par un microphone unique, ou par un nombre limité de microphones, les différents signaux sonores pouvant être émis par les différents pneumatiques d'un véhicule avec un niveau sonore satisfaisant.

L'invention a notamment pour but de résoudre les problèmes précités, et de parvenir à détecter de façon satisfaisante les signaux sonores émis soit par plusieurs pneumatiques, et de préférence l'ensemble des pneumatiques du véhicule, soit par un seul pneumatique, typiquement un pneumatique usé pouvant être situé à différents emplacements sur le véhicule, et ce moyen d'un nombre limité de microphones.

A cet effet, un objet de l'invention est un véhicule automobile comprenant :
- deux essieux décalés longitudinalement, dits respectivement essieu avant et essieu arrière, chaque essieu portant au moins une roue équipée d'un pneumatique ;
- au moins un pare-chocs arrière, ledit pare-chocs définissant une cavité interne ouverte vers l'avant dudit véhicule ; et
- au moins un microphone comprenant un organe de captation de son, destiné à l'acquisition d'un signal sonore généré par au moins un pneumatique porté par une roue de l'un des essieux, ce pneumatique comprenant éventuellement au moins un témoin d'usure sonore,
**caractérisé en ce que** ledit microphone est fixé à une paroi du pare-chocs arrière de telle sorte que l'organe de captation du son dudit microphone est disposé transversalement entre les deux pneumatiques des roues de l'essieu arrière.

On a en effet constaté qu'un microphone fixé sur le pare-chocs arrière, à un niveau transversal situé entre les niveaux transversaux des deux pneumatiques des roues de l'essieu arrière, pouvait, avec un niveau sonore capté important, acquérir un signal en provenance d'un pneumatique pouvant être situé à l'un parmi plusieurs emplacements possibles sur le véhicule. Le niveau sonore capté en provenance d'un pneumatique donné à un emplacement donné peut varier en fonction de la position relative de l'organe de captation de son et du pare-chocs et/ou de l'orientation de cet organe de captation de son.

De façon inattendue, une telle disposition de l'organe de captation de son du microphone au niveau du pare-chocs arrière permet de pouvoir capter un signal sonore d'intensité élevé en provenance tant des pneumatiques du train avant que de ceux du train arrière, alors même que la distance du microphone à ces pneumatiques est relativement élevée ou très élevée.

L'orientation d'un microphone est, de façon bien connue, la direction de captation préférentielle du son (qui n'est jamais totalement uniforme, même avec un microphone dit "omnidirectionnel"), en partant de l'organe de captation (par exemple de son point médian, généralement opposé au support du microphone)".

De préférence, la position relative de l'organe de captation de son et du pare-chocs, et/ou l'orientation de cet organe de captation sont déterminés pour capter un signal sonore provenant de l'arrière du véhicule (l'orientation du microphone étant au moins en partie vers l'arrière du véhicule).

De façon avantageuse, l'angle formé, en partant de l'organe de captation, entre d'une part une direction de captation maximale du signal, et d'autre part une direction horizontale vers l'arrière du véhicule, est d'au plus 30°.

On a en effet constaté de façon surprenante que, dans des conditions appropriées, on pouvait capter un signal sonore de niveau relativement plus élevé, en provenance des pneumatiques des roues du train arrière, en favorisant la captation du signal sonore provenant de l'arrière du véhicule, plutôt que celui provenant de l'avant du véhicule.

Cette constatation est inattendue, voire paradoxale, puisque les roues et les pneumatiques du train arrière comme du train avant sont disposés vers l'avant du pare-chocs, et donc vers l'avant par rapport au microphone fixé sur ce pare-chocs et à son organe de captation. Sans être lié à une interprétation particulière, on peut penser qu'il existe au niveau du pare-chocs, dans la direction vers l'arrière du véhicule, un effet acoustique de « retour du son », ou d'amplification acoustique, pouvant être lié à un phénomène aérodynamique.

Pour bénéficier pleinement de ce niveau sonore élevé provenant de l'arrière du pare-chocs, on peut notamment, en fonction du niveau de détection du microphone utilisé, mettre en oeuvre une ou plusieurs caractéristiques techniques favorisant cette captation.

On utilise typiquement, pour la captation du signal sonore, un microphone dit « omnidirectionnel ». Toutefois, l'organe de captation de son d'un tel microphone est fixé à un support disposé d'un côté de cet organe, et la détection sonore dans la direction du support est en partie réduite du fait d'un effet d'écran induit par ce support. Inversement, il n'y a pas d'effet d'écran dans la direction opposée au support, appelée également direction d'orientation du microphone.

Une caractéristique favorable à la détection d'un signal sonore d'intensité suffisante provenant de l'arrière du véhicule consiste donc à disposer l'organe de captation de son orienté sensiblement vers l'arrière du véhicule, et par exemple d'utiliser un microphone disposé longitudinalement par rapport au véhicule, l'organe de captation de son étant orienté vers l'arrière, alors que support de cet organe est orienté vers l'avant.

On peut également réduire localement l'épaisseur du pare-chocs au niveau de l'organe de captation de son du microphone, par exemple au moyen d'un évidement (par exemple un évidement local d'une paroi interne du pare-chocs). Une paroi localement mince réduit l'amortissement sonore induit par la paroi.

De façon préférée, l'organe de captation du microphone est disposé en vis-à-vis ou dans au moins un orifice de passage de son aménagé dans une partie, de préférence sensiblement verticale d'une paroi du pare-chocs arrière, c'est-à-dire dans une partie de la paroi formant un angle compris conventionnellement entre 70° et 110°, et de préférence compris entre 75° et 95° par rapport à la direction horizontale vers l'arrière du véhicule, en section dans un plan vertical et longitudinal.

L'orifice de captation de son est de façon préférée un orifice traversant, ou traversant sur une partie de sa section.

Par ailleurs, et de façon générale selon l'invention, l'organe de captation du microphone est disposé préférentiellement à l'intérieur de la cavité interne définie par le pare-chocs arrière. On constate dans ce cas un signal sonore relativement plus élevé que pour une position voisine disposée en dehors de cette cavité, notamment pour un signal sonore en provenance d'un pneumatique du train avant. Sans être lié à une interprétation particulière, il est possible que cet effet acoustique soit lié à un effet de cavité sonore et/ou à une certaine réverbération du son par les parois internes du pare-chocs.

De préférence, le véhicule comprend un pneumatique arrière gauche et un pneumatique arrière droite sensiblement symétriques entre eux par rapport à un plan longitudinal vertical médian du véhicule, et la distance de l'organe de captation à l'un quelconque de ces pneumatiques arrière n'excède pas de plus de 30% la distance à l'autre pneumatique arrière, les distances à ces deux pneumatiques arrière étant de préférence sensiblement égales. L'organe de captation est dans ce dernier cas disposé en un point du plan vertical et longitudinal médian du véhicule.

Selon un premier mode de réalisation de l'invention, le véhicule comprend un microphone unique, fixé sur le pare-chocs arrière, de préférence à l'intérieur de la cavité interne de ce pare-chocs arrière.

Avantageusement, l'organe de captation est orienté vers l'arrière, de préférence dans ou en vis-à-vis d'au moins un orifice aménagé dans la paroi du pare-chocs. Un tel microphone peut détecter avec une intensité notable ou importante les signaux sonores provenant tant des pneumatiques du train avant que de ceux du train arrière.

Selon une première variante de ce premier mode de réalisation, le microphone comprend un organe unique de captation de son.

Selon une seconde variante de ce premier mode de réalisation, le microphone comprend deux organes de captation de son, respectivement premier et second organe.

Avantageusement, la position relative du premier organe de captation par rapport au pare-chocs et/ou son orientation sont déterminés pour détecter un signal sonore provenant de l'arrière du véhicule, et la position relative du second organe de captation par rapport au pare-chocs et/ou son orientation sont déterminés pour détecter un signal sonore provenant de l'avant du véhicule.

De préférence, les positions relatives des deux organes de captation sont sensiblement opposées, par exemple par rapport à un axe d'un support commun de ces deux organes, le premier organe de captation étant orienté de préférence vers l'arrière, le second organe de captation étant orienté de préférence vers l'avant, et le support commun étant disposé de préférence entre le premier et le second organe de captation.

Selon un second mode de réalisation de l'invention, le véhicule comprend un châssis, et un second microphone disposé au niveau du, ou sous le châssis du véhicule, de préférence fixé sur ce châssis, ce second microphone comprenant un organe de captation disposé d'une part à une distance à l'essieu avant qui est au moins deux fois plus grande que sa distance à l'essieu arrière, et d'autre part à une distance à un plan longitudinal vertical médian du véhicule qui est plus faible d'au moins 40% et de préférence d'au moins 50% à sa distance à tout plan longitudinal vertical passant par un pneumatique arrière (monté sur une roue arrière).

Typiquement, au moins un des pneumatiques montés sur le véhicule comprend au moins un témoin d'usure sonore. De préférence, tous les pneumatiques montés sur les roues d'un même essieu, et de préférence tous les pneumatiques montés sur le véhicule comprennent un témoin d'usure sonore.

L'invention concerne également un pare-chocs arrière pour véhicule automobile, définissant une cavité interne ouverte vers l'avant du véhicule, **caractérisé en ce que** ce pare-chocs arrière appartient, ou est destiné à équiper un véhicule automobile tel de mentionné précédemment, ce pare-chocs comprenant au moins un microphone fixé sur une paroi de ce pare-chocs, ce microphone comprenant au moins un organe de captation de son disposé de préférence à l'intérieur de la cavité interne.

L'invention sera mieux comprise à la lecture des figures annexées, qui sont fournies à titre d'exemples et ne présentent aucun caractère limitatif, dans lesquelles:
- La figure 1 représente de façon partielle, en vue de dessus, un véhicule selon l'invention.
- La figure 2 représente, en vue latérale, le véhicule représenté à la figure 1.
- La figure 3 représente une coupe verticale et longitudinale d'un pare-chocs selon l'invention, au niveau d'un microphone fixé à ce pare-chocs.

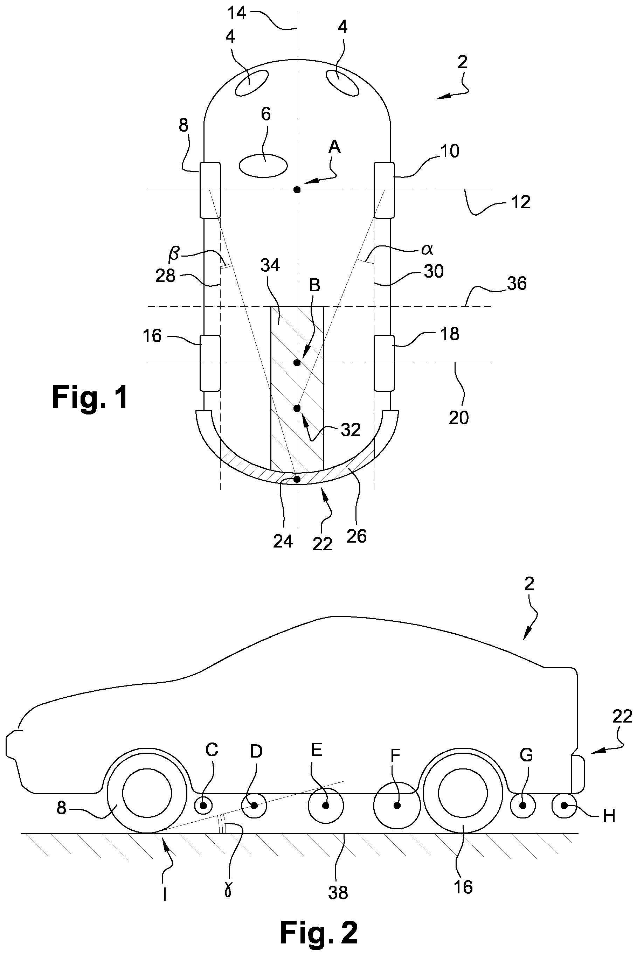

On se réfère maintenant à la figure 1, qui représente (de façon schématique et partielle) un véhicule automobile 2 selon le deuxième mode de réalisation de l'invention. L'avant du véhicule se déduit de la position des feux avant 4, et du volant 6, ces éléments étant représentés en vue de dessus pour clarifier la position du véhicule.

Le véhicule comprend un train de roues avant, dit train avant, formé par deux roues avant équipées de deux pneumatiques avant 8 et 10, typiquement centrés (lorsque le véhicule avance en ligne droite) sur un axe transversal 12, dit axe du train avant.

L'axe longitudinal horizontal 14 du véhicule 2 est l'axe longitudinal horizontal médian du véhicule, disposé conventionnellement à la même hauteur par rapport au sol que l'axe du train avant 12. Le plan vertical passant par cet axe 14 est le plan vertical longitudinal médian du véhicule. Ce plan est un plan de symétrie pour les centres de rotation des roues avant (lorsque le véhicule avance en ligne droite).

Le véhicule comprend aussi deux roues arrière, équipées respectivement d'un pneumatique arrière gauche 16 et d'un pneumatique arrière droit 18. L'axe joignant les centres de rotation des deux roues arrière est un axe transversal 20, dit axe du train arrière.

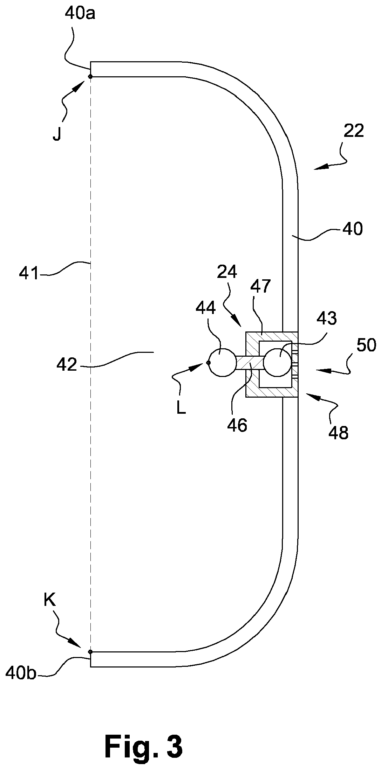

Le véhicule 2 comprend également un pare-chocs arrière 22 définissant une cavité interne ouverte vers l'avant du véhicule. Le terme « cavité interne » sera précisé en liaison avec la description de la figure 3. Ce pare-chocs est équipé d'un premier microphone 24, fixé sur une paroi interne, à l'intérieur de la cavité interne ouverte. Le microphone 24 est disposé sur la figure 1 au niveau transversal médian de l'axe médian 14. D'autres positions de ce microphone sont toutefois possibles, en particulier dans la zone hachurée 26 qui correspond à la partie intérieure de la cavité interne du pare-chocs qui est située à un niveau transversal compris entre les deux pneumatiques arrière 16 et 18 (entre les niveaux transversaux de ces pneumatiques montés sur les roues de l'essieu arrière). Cette partie interne du pare-chocs qui n'est pas située derrière les pneumatiques (et roues) arrière, représentée par la zone hachurée 26, est donc délimitée par les deux plans verticaux et longitudinaux 28 et 30.

Le véhicule comprend également un second microphone 32, fixé non pas sur le pare-chocs, mais sur le châssis du véhicule. Ce second microphone est disposé au niveau de ce châssis, ou immédiatement en dessous de ce châssis de préférence à un niveau transversal et à un niveau longitudinal correspondant à la zone hachurée 34, disposée en arrière de l'axe transversal 36.

On a aussi représenté sur la figure 1 deux points A et B correspondant à des positionnements théoriques possibles de l'organe de captation d'un microphone. Le point A, ou point médian de l'axe du train avant 12 est le point qui est le plus proche des deux pneumatiques avant 8 et 10. Le point B, ou point médian de l'axe transversal arrière 20 est le point qui est le plus proche des deux pneumatiques arrière 16 et 18. Contrairement à ce que l'on pourrait attendre, le positionnement au point A de l'organe de captation d'un microphone ne permet pas de capter avec une intensité suffisante un signal sonore provenant de l'un des pneumatiques avant 8 et 10. De façon analogue, le positionnement au point B de l'organe de captation d'un microphone ne permet pas de capter avec une intensité suffisante un signal sonore provenant de l'un des pneumatiques arrière 16 et 18.

On a enfin représenté sur la figure 1 les angles α et β, dans le plan horizontal de l'organe de captation, formés, par rapport à la direction longitudinale arrière, par les droites joignant l'organe de captation d'un microphone 32 ou 24 à un point d'une roue avant situé longitudinalement au niveau de l'axe du train avant 12.

On se réfère maintenant à la figure 2, qui représente, latéralement, le véhicule de la figure 1. On a représenté sur la figure 2 un certain nombre de points C, D, E, F ,G, H disposés transversalement sur le côté gauche du véhicule, au niveau des pneumatiques (des roues) avant et arrière gauche du véhicule, à un niveau vertical immédiatement en dessous du châssis du véhicule. Les cercles entourant ces points correspondent à des mesures d'intensité du signal sonore capté en ces différents points, en provenance du seul pneumatique avant gauche 8, à partir de mesures réalisées sur un banc d'essai.

On constate de façon surprenante que le bruit généré par le pneumatique avant gauche, et mesuré dans l'axe longitudinal de ce pneumatique juste en dessous du châssis, augmente lorsqu'on s'éloigne du pneumatique (points C, D, E, F), puis diminue à nouveau derrière la roue arrière (points G et H).

Sans être lié à une interprétation particulière, on estime que le bruit émis par le pneumatique est généré au niveau des points de contact du pneumatique 8 avec le sol 38 (au niveau du point I sur la figure 2), mais que le pneumatique 8 lui-même peut former, selon la position de l'organe de captation de son, un écran partiel avec cette source du signal sonore. Ainsi, en fonction de l'angle γ avec le sol 38, le son émis à partir du point I peut être affaibli, notamment au niveau des points de captation C et D du fait de l'effet d'écran partiel ou total résultant du pneumatique 8 lui-même. L'intensité sonore maximale est mesurée au point F, soit relativement loin du pneumatique 8 générant le signal, ce qui correspond à un angle γ avec le sol faible. A contrario, l'intensité sonore diminue derrière le pneumatique arrière 16, vraisemblablement du fait de l'effet d'écran de ce pneumatique arrière.

On a donc trouvé qu'il est très important de tenir compte de l'effet d'écran généré par les différents pneumatiques, y compris le pneumatique générant le signal sonore, et que cet effet se révèle de manière inattendue être prioritaire par rapport à l'effet de distance à l'organe de captation de son.

Si l'on se réfère à nouveau à la figure 1, on a trouvé de plus que dans un plan horizontal proche du châssis du véhicule, il importait, pour obtenir un signal sonore de forte intensité que la valeur de l'angle α (ou β) soit relativement faible, le son semblant se développer principalement vers l'arrière du véhicule, avec une zone de signal sonore de forte intensité correspondant sensiblement à un « cône de bruit » relativement intense, d'axe longitudinal, l'intensité sonore décroissant progressivement lorsque les valeurs des angles α (ou β), et γ augmentent, à l'extérieur de ce cône de bruit.

Ainsi, en dépit d'une distance élevée à la source sonore située au niveau du train avant, on a trouvé que le pare-chocs arrière se révèle être une zone de captation satisfaisante du signal sonore émis par un pneumatique avant, du fait que les angles α (ou β) et γ sont relativement faibles. Toutefois, selon l'invention, l'organe de captation de son du microphone n'est pas situé derrière l'un des pneumatiques arrière 16, 18, pour éviter un effet d'écran par ce pneumatique, mais, selon un axe transversal, entre (les niveaux transversaux de) ces pneumatiques, et de préférence dans la cavité interne du pare-chocs (dans la partie 26 de cette cavité interne qui n'est pas disposée derrière l'un des pneumatiques arrière).

Le signal sonore reste relativement élevé dans la zone 26, lorsque l'on s'éloigne de l'axe longitudinal médian 14. Ceci pourrait être dû à un effet de cavité sonore, et/ou à une réverbération du signal sonore par les parois internes du pare-chocs.

Par ailleurs, on a trouvé que la zone 34 représentée sur la figure 1, qui est une zone de points du châssis ou disposés en dessous du châssis, qui sont relativement proches de l'axe médian et relativement à l'arrière du véhicule, est également une zone favorable de captation du signal sonore émis par un pneumatique avant, du fait semble-t-il que les valeurs des angles α (ou β) et γ correspondant à ces points sont relativement faibles. Cette zone 34 correspond aux points réunissant deux critères : D'une part la distance d'un point de cette zone 34 à l'essieu avant est au moins deux fois plus grande que la distance de ce point à l'essieu arrière. D'autre part, la distance du point à un plan longitudinal vertical médian du véhicule est plus faible d'au moins 40% à sa distance à tout plan longitudinal vertical passant par un pneumatique arrière 16, 18. Ainsi, cette zone 34 permet d'implanter un second microphone, typiquement fixé au châssis, dédié à la captation des signaux sonores provenant des pneumatiques avant. L'organe de captation de ce second microphone est alors avantageusement orienté vers l'avant.

On se réfère maintenant à la figure 3, qui représente, en coupe verticale dans un plan longitudinal, un pare-chocs arrière 22 comprenant une paroi matérielle 40 (par exemple en métal, matériau composite, ou autre), délimitée à son extrémité par un bord supérieur 40a et un bord inférieur 40b. Ce pare-chocs arrière 22 définit une cavité interne 42 ouverte vers l'avant du véhicule, comprise entre la paroi 40 et une surface (fictive) 41 joignant le bord supérieur 40a, sur lequel est situé le point J, et le bord inférieur 40b sur lequel est situé le point K. la surface 41 est générée par de tels segments JK disposés dans des plans verticaux et longitudinaux. Un point donné M (qui n'est pas un point interne à la paroi matérielle 40), appartient conventionnellement à la cavité interne 42 si l'on peut définir un segment OP comprenant ce point M (au sens large, M pouvant coïncider avec O ou P), tel que O et P sont deux points d'une surface d'une paroi 40 du pare-chocs arrière disposés dans un même plan vertical et longitudinal.

Le pare-chocs arrière 22 comprend un microphone 24, de préférence unique, qui comprend un premier organe de captation 43 orienté vers l'arrière du véhicule, dédié à la captation des signaux sonores émis par les pneumatiques 16, 18 du train arrière. Il comprend également un second organe de captation 44 orienté vers l'avant du véhicule, et dédié à la captation des signaux sonores émis par les pneumatiques 8, 10 du train avant.

Le premier organe de captation 43 et le second organe de captation 44 sont disposés de part et d'autre d'un support commun 46, qui est une partie intégrante du microphone 24.

Ce microphone 24 est supporté par un élément de support 47, lui-même inséré dans un orifice 48 aménagé dans la paroi 40 du pare-chocs. L'élément de support 47 peut être fixé au pare-chocs par collage, vissage, frettage ou tout autre moyen. Il comprend une paroi mince 50 de protection du microphone 24, comprenant un ou plusieurs orifices traversants de passage du son, typiquement de relativement petit diamètre.

L'orifice 48 dans la paroi 40 est bouché par l'élément de support 47. Toutefois, conventionnellement, on considère que le premier organe de captation 43 est disposé dans l'orifice 48 aménagé dans la paroi 40, cet orifice 48 étant considéré comme un « orifice de passage de son » car il permet le passage du son provenant de l'arrière du véhicule à travers la paroi mince 50. De plus, cette paroi mince 50 comprend de petits orifices traversants de passage de son.

Le premier organe de captation 43 considéré comme disposé à l'intérieur de la cavité interne du pare-chocs arrière, bien qu'étant positionné à un niveau correspondant à l'épaisseur de cette paroi 40.

Enfin, conventionnellement, la position d'un organe de captation est celle du point de cet organe qui est disposé de façon opposée au support de cet organe, soit le point L pour le second organe de captation 44.

Le premier organe de captation 43 capte de façon très satisfaisante les signaux sonores générés par les pneumatiques 16, 18 du train arrière, qui sont captés de façon optimale en orientant l'organe 44 vers l'arrière du véhicule, du fait d'un effet acoustique constaté de « retour du son » ou d'amplification acoustique, pouvant être lié à un phénomène aérodynamique.

Le second organe de captation 44 capte de façon très satisfaisante les signaux sonores générés par les pneumatiques 8, 10 du train avant qui sont captés de façon optimale en orientant l'organe 44 vers l'avant du véhicule.

Cette captation très satisfaisante des signaux sonores émis tant par les pneumatiques du train avant que par ceux du train arrière permet d'utiliser un microphone moins performant, dont le seuil de détection de chaque organe de captation est relativement plus élevé que dans le cas où l'on utilise un organe de captation unique, qui ne peut être orienté de façon optimale pour la détection du signal généré par l'ensemble des pneumatiques.

L'élément de support 47 forme en liaison avec le support 46 un écran entre les deux organes de captation 43 et 44. Ainsi, chacun de ces organes de captation reçoit principalement les signaux sonores provenant de l'un seulement des trains de pneumatiques avant et arrière du véhicule.

Ce mode de réalisation de l'invention, tel que représenté de façon très partielle à la figure 3, correspond donc typiquement au premier mode de réalisation de l'invention, du type à microphone unique, contrairement au mode de réalisation de la figure 1 (comprenant deux microphones distincts 24 et 32).

L'invention n'est pas limitée aux modes de réalisation présentés, et d'autres modes de réalisation, dans la portée des revendications annexées, apparaîtront clairement à l'homme du métier. Il est notamment possible d'utiliser, conjointement à un mode de réalisation de l'invention, tout élément technique complémentaire adéquat déjà connu dans l'état de la technique.

## Revendications

1. Véhicule automobile (2) comprenant :
- deux essieux décalés longitudinalement, dits respectivement essieu avant et essieu arrière, chaque essieu portant au moins une roue équipée d'un pneumatique (8, 10, 16, 18) ;
- au moins un pare-chocs arrière (22), définissant une cavité interne (42) ouverte vers l'avant dudit véhicule ; et
- au moins un microphone (24) comprenant un organe de captation de son (43, 44), destiné à l'acquisition d'un signal sonore généré par au moins un pneumatique (8, 10, 16, 18) porté par une roue de l'un des essieux, ce pneumatique comprenant éventuellement au moins un témoin d'usure sonore,
**caractérisé en ce que** ledit microphone (24) est fixé à une paroi (40) du pare-chocs arrière (22) de telle sorte que l'organe de captation du son (43, 44) dudit microphone est disposé transversalement entre les deux pneumatiques (16, 18) des roues de l'essieu arrière.

2. Véhicule (2) selon la revendication 1, dans lequel l'orientation de l'organe de captation (42, 43) par rapport au pare-chocs est déterminée pour détecter un signal sonore provenant de l'arrière du véhicule.

3. Véhicule (2) selon la revendication 2, dans lequel l'angle formé, en partant de l'organe de captation, entre d'une part une direction de captation maximale du signal, et d'autre part une direction horizontale vers l'arrière du véhicule est d'au plus 30°.

4. Véhicule (2) selon l'une quelconque des revendications 1 à 3, dans lequel la position relative de l'orientation de l'organe de captation (42, 43) par rapport au pare-chocs est déterminée pour détecter un signal sonore provenant de l'arrière du véhicule.

5. Véhicule (2) selon la revendication 4, dans lequel l'organe de captation (43) du microphone est disposé en vis-à-vis ou dans un orifice de passage de son (48) aménagé dans une partie sensiblement verticale de la paroi (40) du pare-chocs arrière (22).

6. Véhicule (2) selon l'une quelconque des revendications 1 à 5, dans lequel l'organe de captation (43, 44) du microphone est disposé à l'intérieur de ladite cavité interne dudit pare-chocs arrière.

7. Véhicule (2) selon l'une quelconque des revendications 1 à 6, comprenant un pneumatique arrière gauche (16) et un pneumatique arrière droit (18) sensiblement symétriques entre eux par rapport à un plan longitudinal vertical médian du véhicule, dans lequel la distance de l'organe de captation (24) à l'un quelconque de ces pneumatiques arrière n'excède pas de plus de 30% la distance à l'autre pneumatique arrière, les distances à ces deux pneumatiques arrière étant de préférence sensiblement égales.

8. Véhicule (2) selon l'une quelconque des revendications 1 à 7, comprenant un microphone unique (24).

9. Véhicule (2) selon la revendication 8, dans lequel le microphone comprend un organe unique de captation du son.

10. Véhicule (2) selon la revendication 8, dans lequel le microphone (24) comprend au moins deux organes de captation de son, respectivement premier (43) et second (44) organe.

11. Véhicule selon la revendication 10, dans lequel :
- la position relative du premier organe de captation (43) par rapport au pare-chocs et/ou son orientation sont déterminés pour capter un signal sonore provenant de l'arrière du véhicule ;
- la position relative du second organe de captation (44) par rapport au pare-chocs et/ou son orientation sont déterminés pour capter un signal sonore provenant de l'avant du véhicule ;
les positions relatives des deux organes (43, 44) étant de préférence sensiblement opposées, par exemple par rapport à un axe d'un support commun (46) de ces deux organes, le premier organe de captation (43) étant orienté de préférence vers l'arrière, le second organe de captation (44) étant orienté de préférence vers l'avant, et le support commun (46) étant disposé de préférence entre le premier et le second organe de captation.

12. Véhicule (2) selon l'une quelconque des revendications 1 à 7, comprenant un châssis, et un second microphone (32) disposé au niveau du, ou sous le châssis dudit véhicule, ce second microphone (32) comprenant un organe de captation disposé d'une part à une distance à l'essieu avant qui est au moins deux fois plus grande que sa distance à l'essieu arrière, et d'autre part à une distance à un plan longitudinal vertical médian du véhicule qui est plus faible d'au moins 40% à sa distance à tout plan longitudinal vertical passant par un pneumatique arrière (16, 18).

13. Véhicule (2) selon l'une quelconque des revendications précédentes, dans lequel au moins l'un des pneumatiques (8, 10, 16, 18) comprend au moins un témoin d'usure sonore.

14. Pare-chocs arrière (22) pour véhicule automobile, définissant une cavité interne (42) ouverte vers l'avant du véhicule, **caractérisé en ce que** ce pare-chocs arrière (22) appartient, ou est destiné à équiper un véhicule automobile (2) selon l'une quelconque des revendications précédentes, ce pare-chocs (22) comprenant au moins un microphone (24) fixé à une paroi (40) de ce pare-chocs, ce microphone (24) comprenant au moins un organe de captation (43, 44) de son disposé de préférence à l'intérieur de ladite cavité interne.

## Patentansprüche

1. Kraftfahrzeug (2), welches umfasst:
- zwei in Längsrichtung zueinander versetzte Achsen, Vorderachse bzw. Hinterachse genannt, wobei jede Achse wenigstens ein Rad trägt, das mit einem Reifen (8, 10, 16, 18) ausgestattet ist;
- wenigstens einen hinteren Stoßfänger (22), der einen inneren Hohlraum (42) definiert, der zur Vorderseite des Fahrzeugs hin offen ist; und
- wenigstens ein Mikrofon (24), das ein Schallauffangorgan (43, 44) umfasst, das zur Erfassung eines Schallsignals bestimmt ist, das von wenigstens einem Reifen (8, 10, 16, 18) erzeugt wird, der von einem Rad einer der Achsen getragen wird, wobei dieser Reifen eventuell wenigstens einen akustischen Verschleißanzeiger umfasst,
**dadurch gekennzeichnet, dass** das Mikrofon (24) an einer Wand (40) des hinteren Stoßfängers (22) derart befestigt ist, dass das Schallauffangorgan (43, 44) des Mikrofons quer zwischen den zwei Reifen (16, 18) der Räder der Hinterachse angeordnet ist.

2. Fahrzeug (2) nach Anspruch 1, wobei die Ausrichtung des Auffangorgans (42, 43) in Bezug auf den Stoßfänger dafür bestimmt ist, ein von der Hinterseite des Fahrzeugs kommendes Schallsignal zu detektieren.

3. Fahrzeug (2) nach Anspruch 2, wobei der Winkel, welcher, ausgehend von dem Auffangorgan, zwischen einerseits einer Richtung maximaler Erfassung des Signals und andererseits einer horizontalen Richtung zur Hinterseite des Fahrzeugs hin gebildet wird, höchstens 30° beträgt.

4. Fahrzeug (2) nach einem der Ansprüche 1 bis 3, wobei die relative Position der Ausrichtung des Auffangorgans (42, 43) in Bezug auf den Stoßfänger dafür bestimmt ist, ein von der Hinterseite des Fahrzeugs kommendes Schallsignal zu detektieren.

5. Fahrzeug (2) nach Anspruch 4, wobei das Auffangorgan (43) des Mikrofons gegenüber oder in einer Schalldurchgangsöffnung (48) angeordnet ist, die in einem im Wesentlichen vertikalen Teil der Wand (40) des hinteren Stoßfängers (22) angeordnet ist.

6. Fahrzeug (2) nach einem der Ansprüche 1 bis 5, wobei das Auffangorgan (43, 44) des Mikrofons im Inneren des inneren Hohlraums des hinteren Stoßfängers angeordnet ist.

7. Fahrzeug (2) nach einem der Ansprüche 1 bis 6, welches einen linken Hinterreifen (16) und einen rechten Hinterreifen (18) umfasst, die im Wesentlichen symmetrisch zueinander bezüglich einer vertikalen Längsmittelebene des Fahrzeugs sind, wobei der Abstand des Auffangorgans (24) von einem beliebigen dieser Hinterreifen den Abstand von dem anderen Hinterreifen um nicht mehr als 30 % übersteigt, wobei die Abstände von diesen zwei Hinterreifen vorzugsweise im Wesentlichen gleich sind.

8. Fahrzeug (2) nach einem der Ansprüche 1 bis 7, welches ein einziges Mikrofon (24) umfasst.

9. Fahrzeug (2) nach Anspruch 8, wobei das Mikrofon ein einziges Schallauffangorgan umfasst.

10. Fahrzeug (2) nach Anspruch 8, wobei das Mikrofon (24) wenigstens zwei Schallauffangorgane umfasst, ein erstes (43) bzw. zweites (44) Organ.

11. Fahrzeug nach Anspruch 10, wobei:
- die relative Position des ersten Auffangorgans (43) in Bezug auf den Stoßfänger und/oder seine Ausrichtung dafür bestimmt sind, ein von der Hinterseite des Fahrzeugs kommendes Schallsignal aufzufangen;
- die relative Position des zweiten Auffangorgans (44) in Bezug auf den Stoßfänger und/oder seine Ausrichtung dafür bestimmt sind, ein von der Vorderseite des Fahrzeugs kommendes Schallsignal aufzufangen;
wobei die relativen Positionen der zwei Organe (43, 44) vorzugsweise im Wesentlichen entgegengesetzt sind, zum Beispiel in Bezug auf eine Achse eines gemeinsamen Trägers (46) dieser zwei Organe, wobei das erste Auffangorgan (43) vorzugsweise nach hinten ausgerichtet ist, das zweite Auffangorgan (44) vorzugsweise nach vorn ausgerichtet ist und der gemeinsame Träger (46) vorzugsweise zwischen dem ersten und dem zweiten Auffangorgan angeordnet ist.

12. Fahrzeug (2) nach einem der Ansprüche 1 bis 7, welches ein Fahrgestell und ein zweites Mikrofon (32), das an oder unter dem Fahrgestell des Fahrzeugs angeordnet ist, umfasst, wobei dieses zweite Mikrofon (32) ein Auffangorgan umfasst, das einerseits in einem Abstand von der Vorderachse angeordnet ist, welcher wenigstens doppelt so groß wie sein Abstand von der Hinterachse ist, und andererseits in einem Abstand von einer vertikalen Längsmittelebene des Fahrzeugs, welcher um wenigstens 40 % kleiner als sein Abstand von jeder vertikalen Längsebene ist, die durch einen Hinterreifen (16, 18) verläuft.

13. Fahrzeug (2) nach einem der vorhergehenden Ansprüche, wobei wenigstens einer der Reifen (8, 10, 16, 18) wenigstens einen akustischen Verschleißanzeiger umfasst.

14. Hinterer Stoßfänger (22) für ein Kraftfahrzeug, welcher einen inneren Hohlraum (42) definiert, der zur Vorderseite des Fahrzeugs hin offen ist, **dadurch gekennzeichnet, dass** dieser hintere Stoßfänger (22) zu einem Kraftfahrzeug (2) nach einem der vorhergehenden Ansprüche gehört oder zur Ausstattung eines solchen bestimmt ist, wobei dieser Stoßfänger (22) wenigstens ein Mikrofon (24) umfasst, das an einer Wand (40) dieses Stoßfängers befestigt ist, wobei dieses Mikrofon (24) wenigstens ein Schallauffangorgan (43, 44) umfasst, das vorzugsweise im Inneren des inneren Hohlraums angeordnet ist.

## Claims

1. Motor vehicle (2), comprising:
- two longitudinally offset axles, respectively referred to as the front axle and rear axle, each axle carrying at least one wheel fitted with a tyre (8, 10, 16, 18);
- at least one rear bumper (22) defining an internal cavity (42) which is open towards the front of the said vehicle; and
- at least one microphone (24) comprising a sound pickup component (43, 44) intended for the acquisition of a sound signal generated by at least one tyre (8, 10, 16, 18) carried by a wheel of one of the axles, this tyre optionally comprising at least one audible wear indicator,
**characterized in that** the said microphone (24) is fixed to a wall (40) of the rear bumper (22) so that the sound pickup component (43, 44) of the said microphone is arranged transversely between the two tyres (16, 18) of the wheels of the rear axle.

2. Vehicle (2) according to Claim 1, wherein the orientation of the pickup component (42, 43) with respect to the bumper is determined in order to detect a sound signal coming from the rear of the vehicle.

3. Vehicle (2) according to Claim 2, wherein the angle formed, starting from the pickup component, between on the one hand a maximum signal pickup direction and on the other hand a horizontal direction towards the rear of vehicle is at most 30°.

4. Vehicle (2) according to any one of Claims 1 to 3, wherein the relative position of the orientation of the pickup component (42, 43) with respect to the bumper is determined in order to detect a sound signal coming from the rear of the vehicle.

5. Vehicle (2) according to Claim 4, wherein the pickup component (43) of the microphone is arranged facing or in a sound passage orifice (48) formed in a substantially vertical part of the wall (40) of the rear bumper (22).

6. Vehicle (2) according to any one of Claims 1 to 5, wherein the pickup component (43, 44) of the microphone is arranged inside the said internal cavity of the said rear bumper.

7. Vehicle (2) according to any one of Claims 1 to 6, comprising a rear left tyre (16) and a rear right tyre (18), which are substantially symmetrical to one another with respect to a vertical longitudinal midplane of the vehicle, wherein the distance from the pickup component (24) to either one of these rear tyres does not exceed at most 30% of the distance to the other rear tyre, the distances from these two rear tyres preferably being substantially equal.

8. Vehicle (2) according to any one of Claims 1 to 7, comprising a single microphone (24).

9. Vehicle (2) according to Claim 8, wherein the microphone comprises a single sound pickup component.

10. Vehicle (2) according to Claim 8, wherein the microphone (24) comprises at least two sound pickup components, respectively a first component (43) and a second component (44).

11. Vehicle according to Claim 10, wherein:
- the relative position of the first pickup component (43) with respect to the bumper and/or its orientation are determined in order to pick up a sound signal coming from the rear of the vehicle;
- the relative position of the second pickup component (44) with respect to the bumper and/or its orientation are determined in order to pick up a sound signal coming from the front of the vehicle;
the relative positions of the two components (43, 44) preferably being substantially opposite, for example with respect to an axis of a common support (46) of these two components, the first pickup component (43) preferably being oriented towards the rear, the second pickup component (44) preferably being oriented towards the front, and the common support (46) preferably being arranged between the first and the second pickup components.

12. Vehicle (2) according to any one of Claims 1 to 7, comprising a chassis and a second microphone (32) arranged level with or under the chassis of the said vehicle, this second microphone (32) comprising a pickup component arranged on the one hand at a distance from the front axle which is at least twice as great as its distance from the rear axle, and on the other hand at a distance from a vertical longitudinal midplane of the vehicle which is less by at least 40% than its distance from any vertical longitudinal plane passing through a rear tyre (16, 18).

13. Vehicle (2) according to any one of the preceding claims, wherein at least one of the tyres (8, 10, 16, 18) comprises at least one audible wear indicator.

14. Rear bumper (22) for a motor vehicle, defining an internal cavity (42) which is open towards the front of the vehicle, **characterized in that** this rear bumper (22) belongs, or is intended to be fitted to, a motor vehicle (2) according to any one of the preceding claims, this bumper (22) comprising at least one microphone (24) fixed to a wall (40) of this bumper, this microphone (24) comprising at least one sound pickup component (43, 44) preferably arranged inside the said internal cavity.
